# EUROPEAN PATENT APPLICATION

(11) **EP 3 291 236 A1**
(43) Date of publication of application: **07.03.2018**
(21) Application number: 17188882.9
(22) Date of filing: 31.08.2017
(51) Int. Cl.: G11B 27/036, G06F 17/30

(54) **METHOD AND SYSTEM FOR PROVIDING A COMBINED DIGITAL IMAGE STREAM**

(30) Priority: 01.09.2016 NL 2017401; 14.04.2017 US 201715488192
(71) Applicant: Dutch Innovation Lab B.V., 3054 AD Rotterdam (NL)
(72) Inventor: BROUNS, Marcel Johan Jozef, 3705 GE Zeist (NL)
(74) Representative: Patentwerk B.V.

(57) **Abstract**

The invention relates to a method for providing a combined digital image stream, comprising providing a first digital image stream or sequence, incorporating a machine-readable mark to at least part of the first digital image stream or sequence, the mark at least comprising a position within or with respect to the first image stream or sequence and/or an interval within the length of the first image stream or sequence providing at least a second digital image stream, inserting, based on the mark, with the aid of a computer, the second image stream or sequence into the first digital image stream or sequence at the position and/or interval within the first image stream or sequence, and outputting a combined digital image stream, wherein the second image stream is incorporated in the first image stream or sequence. The invention further relates to a system for performing the method.

## Description

The present invention relates to a method and system for providing a combined digital image stream. The invention further relates to a data carrier comprising image sequence software.

Methods for combining a digital image stream are known in the art. In general, they are applied in professional studios, where a team of professionals combines multiple digital image streams or sequences (for instance a video mounted in a slide show), in general by subsequently creating or recording the streams, and then manually mounting the images from multiple sources. This method involves the use of multiple specialized technicians and studio equipment. Although the results thus obtained match the desired effect, this method is both costly and time consuming.

As a cheap alternative, screen capturing software exists, with which a recording can be made of - amongst other things - multiple image streams at the same time. However, with this software, it is impossible to create combined videos as predetermined, and it requires advanced skills of a user.

Meanwhile, most slide show software still does not provide more elaborate options than to include a pre-recorded video on just one slide, as a result without the possibility to define a time-relationship between the video and the progression of the slides. In all alternative cases post-processing of the result is still required.

An objective of the invention is to provide a method for combining digital image streams that takes away the drawbacks of the state of the art.

The present invention thereto provides a method for providing a combined digital image stream, comprising the steps of: providing a first digital image stream or sequence; incorporating a machine-readable mark to at least part of the first digital image stream or sequence, the mark at least comprising: a position within or with respect to the first image stream or sequence; and/or an interval within the length of the first image stream or sequence; providing at least a second digital image stream; inserting, based on the mark, with the aid of a computer, the second image stream or sequence into the first digital image stream or sequence at the position and/or interval within the first image stream or sequence; and outputting a combined digital image stream, wherein the second image stream is incorporated in the first image stream or sequence.

A digital image stream or sequence is to be understood here as any kind of moving images or stills that are to follow each other in time. This may be a standardized movie file, such as an avi or a mpeg file, or any standardized streaming media, a slide show, or a discrete number of images intended as a sequence in time without a pre-described format. Also, a web page or an Excel sheet may be possible. The same goes for the second stream, be it that this stream is typically understood to be a standardized movie file, such as an avi or a mpeg file, or a movie that is at least perceived as continuous instead of discrete in time in any standardized streaming media, and so is the combined output stream that is output. Where the application mentions a digital image stream, this may also be understood as digital image sequence, unless explicitly mentioned otherwise.

The position of the second image stream within or with respect to the first image stream or sequence is to be understood as a position on the screen. In general, the second image stream is smaller than the first image stream or sequence, and the position can be indicated with a frame that falls within or at least overlaps with the first image stream or sequence. However, a full screen overlay is also thinkable.

An interval is to be seen as an interval in time, or a number of subsequent images in an image sequence follow each other with or without a predetermined time slot in between.

The method thus provides a preprocessed first digital image stream, wherein the preprocessed first digital stream incorporates the machine-readable mark. The machine-readable mark comprises information on preconditions for mixing the preprocessed first digital stream with a second digital stream. The information or precondition may be a position and/or an interval, as specified above. Thereafter, the inserting step is based on the mark providing the information. The inserting step inserts the second digital image stream into the preprocessed first digital image stream using the information providing a combined digital image stream. The effect of the preprocessed digital image stream being used for the inserting step is that the method allows to have no or a minimal manual intervention while inserting. The current method therefore provides a simplified method for combining digital image streams, thereby reaching the objective of the invention.

In addition, the invention enables to insert or merge a first digital image stream into a second digital image stream, at a predetermined position that is imposed by the preprocessed digital image stream. This enables for to incorporate live video at a predetermined position in a slide show. Also, a single operator or presenter could incorporate a live presentation in a slide show.

In an embodiment of the present invention, the second image stream is registered/generated during running or playing the first image stream. This generation means that a recording is made, with the aid of a camera, during running or playing the first image stream. Operating a camera, especially a professional camera, requires an operator, such as a cameraman, to be present at least part of the recording time, such as the start of the recording. The set-up wherein the second image stream is recorded while the first image stream is running is typically seen as a complex situation requiring a team, involving a cameraman, a technician operating the video mixer and a director providing guidance to the whole process of providing a combined image stream. This embodiment provides the advantage of reducing the complexity of providing this combined digital stream while recording the second image stream, because the preprocessed first image stream allows for an automated or at least partly automated inserting.

In a further embodiment, running or playing the first image stream may be controlled by a user, for instance by "clicking" through a presentation, giving a spoken explanation to the slides while being recorded. To that purpose, the first image stream may comprise a slide show. For example, during a teleconference people find it beneficial to see each other. If then during a teleconference a presentation is given, typically, the video is replaced by the slides of the presentation. Another typically way of operation is to have a fixed frame, most of the time overlapping with information on the slide, impairing conveying all the information on the slide. This further embodiment provides the presenter of the presentation with the ability to present the slides while the frame is placed at a convenient position on the slide and/or on a convenient time in the slide to optimize the conveying of information on the slides while. Thus, this further embodiment provides the advantage of providing a combined digital image stream in a simplified way.

In a further embodiment according to the present invention, the mark comprises a BAR, QR or color code, such as multiple pixels comprising a predetermined color. The mark may be placed in the image stream or sequence, for instance by simply inserting an image in a regular way. The image then comprises the bar or QR or color code, and may be provided by dedicated software. This provides the advantage of using standardized ways of presenting information for further simplifying the method of providing a combined digital image stream.

In yet a further embodiment, the position and interval are determined by the position and the interval of the mark itself. The mark is then used as a frame for the second image to be placed in the first image stream or sequence. The color code may for instance comprise a color that is not (expected to be) present in the first image stream, so that it can be recognized by a machine, while inserting the second image stream. While incorporating the mark in the first digital stream for providing the preprocessed first digital stream, the mark will be visible during incorporating. Typically, the incorporating step is done by an operator. Hence, this embodiment provides the operator the advantage of a direct visual feedback of the position and/or the interval where and/or when the inserting of the second digital stream will be done, while providing the computer with a machine-readable version of the same information, thereby further simplifying the method for providing the combined digital image stream.

It is preferred that the mark comprises additional information, such as an input source, a display ratio, a cropping setting and/or a resolution. This way, the origin and look and feel of the second image stream can be pre-set when inserting the mark into the first image stream. For instance, when the first image sequence is a slide show, a mark represented by an image comprising a bar code that comprises information on which camera stream is to be used as the second image stream can be provided and inserted in the slide show, while the size and position of the mark also indicate the size and position of the second image stream. The mark can be placed in a frame, with for instance a subtitle for the second image stream. This provides the further advantage of providing further information in a visual way during incorporating the mark in the first digital stream, while this information may also be provided in a simple machine-readable way to the computer in the inserting step.

The same machine-readable mark may be incorporated multiple times in the same image stream or sequence, and/or different machine-readable marks may be incorporated. Also, when multiple machine-readable marks are incorporated, multiple digital image stream may be inserted based on the respective multiple machine-readable marks.

The invention further relates to a system for providing a combined digital image stream, comprising a first input for receiving a first digital image stream or sequence, a user interface, provided with tools for incorporating a machine-readable mark to at least part of the first digital image stream or sequence, the mark at least comprising a position within or with respect to the first image stream or sequence and/or an interval within the length of the first image stream or sequence, a second input, for receiving at least a second digital image stream, a processing module, for inserting, based on the mark, the second image stream or sequence into the first digital image stream or sequence at the position and/or interval within the first image stream or sequence, and outputting a combined digital image stream, wherein the second image stream is incorporated in the first image stream or sequence. The system may in particular be adapted for performing the method as described in the above. Modules as described above and in the following, may be implemented in hard- or software, or combinations thereof.

The system may be provided with a camera for registering/generating the second sequence during playing the first sequence and, adapted for displaying a first image stream or sequence formed by a slide show and provided with tools for providing a mark, in the form of a BAR, QR or color code, such as multiple pixels with a predetermined color.

According to another aspect of the invention, an incorporating module for generating a pre-processed digital image stream, comprising: a stream receiver for receiving a first digital image stream; a mark receiver for receiving a machine-readable mark comprising at least one of a group of: a position within or with respect to the first digital image stream or sequence; and/or an interval within the length of the first digital image stream or sequence; and incorporating unit for incorporating the machine-readable mark into the first digital image stream thereby generating the pre-processed digital image stream.

According to another aspect of the invention, inserting device for generating a combined digital image stream, comprising: a mark reader unit for extracting mark information from a machine-readable mark incorporated in a pre-processed digital image stream, wherein the machine-readable mark comprises at least one of a group of: a position within or with respect to the first digital image stream or sequence; and/or an interval within the length of the first digital image stream or sequence; and a digital image mixer for inserting, based on the mark information, with the aid of a computer, a second digital image stream into the pre-processed digital image stream thereby generating the combined digital image stream.

The skilled reader understands that the incorporating module and the inserting device both comprise parts of the invention in a plug-socket manner.

The invention also relates to a data carrier, comprising a program extension for image sequence software, in particular slideshow-software, for providing an incorporating tool for incorporating a machine-readable mark to at least part of the first digital image stream or sequence, the mark at least comprising a position within or with respect to the first image stream or sequence and/or an interval within the length of the first image stream or sequence. This may for instance be a downloadable plugin for slideshow software. The invention also relates to a computer system, comprising image sequence software, in particular slide show software, provided with an extension as described above.

The invention also relates to a data carrier, comprising a program for image sequence software, such as a program extension, in particular slideshow-software, for providing an inserting tool, wherein the inserting tool executes the steps of: extracting mark information from a machine-readable mark incorporated in a pre-processed digital image stream, wherein the machine-readable mark comprises at least one of a group of: a position within or with respect to the first digital image stream or sequence; and/or an interval within the length of the first digital image stream or sequence; and inserting, based on the mark information, with the aid of a computer, a second digital image stream into the pre-processed digital image stream.

The invention will now be elucidated into more detail with reference to the following figures, wherein:
Figure 1 shows a schematic view of a system according to the present invention.
Figure 2 shows a machine-readable mark for use in the present invention;
Figure 3 shows the incorporation of the mark in a first image stream;
Figure 4 shows how the mark is replaced with the second image stream;
Figures 5a-d show a number of images from a first sequence, provided with the same mark; and
Figures 6a-d show some stills from the resulting combined image stream after inserting the second image stream into the first image sequence.
Figure 7 schematically shows an embodiment of the method.
Figure 8 schematically shows an embodiment of a computer program product.

**REFERENCE LIST**

| | | |
|---|---|---|
| 100 | | system |
| 109 | DigImgStrm1 | first digital image stream |
| 110 | DigImgRx1 | first digital image stream receiver |
| 111 | RxDigImgStrm1 | received first digital image stream |
| 115 | MrkSrc | mark source |
| 116 | Mrk | machine-readable mark |
| 119 | DigImgStrm2 | second digital image stream |
| 120 | DigImgRx2 | second digital image stream receiver |
| 121 | RxDigImgStrm2 | received second digital image stream |
| 130 | Incorp | incorporating module |
| 131 | PreDigImgStrm | preprocessed first digital image stream |
| 140 | Insrt | inserting device |
| 141 | OutpComImgStrm | outputted combined digital image stream |
| 150 | MrkRd | mark reader |
| 151 | MrkInfo | mark information |
| 160 | DigImgMix | digital image stream mixer |
| 161 | ComImgStrm | combined digital image stream |
| 170 | Outp | outputting module |
| 200 | Mrk | mark (embodiment) |
| 210 | | frame |
| 220 | | webcam symbol |
| 230 | | QR code |
| 700 | | sequence diagram |
| 710 | prov1 | providing first stream |
| 720 | incorp | incorporating mark in first stream |
| 730 | prov2 | providing second stream |
| 740 | insrt | inserting second stream into first stream |
| 750 | outp | outputting combined stream |
| 800 | | computer readable storage medium |
| 810 | | writable part |
| 820 | | computer program |

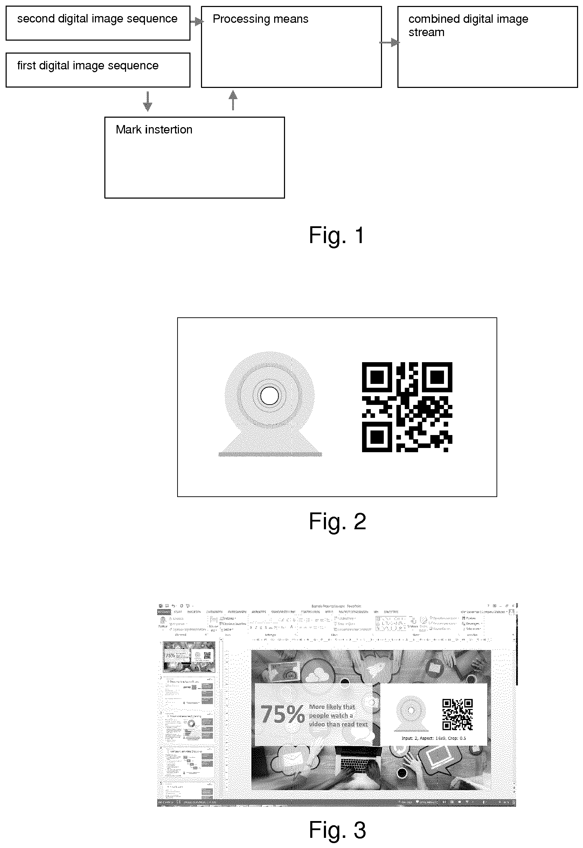

Figure 1 shows a schematic view of a system 100 according to the present invention. The system comprises a first digital image stream receiver 110 for receiving a first digital image stream 109 and providing a received first digital image stream 1111, and a mark source 115 providing a machine-readable mark 116. The system further comprises incorporating module 130 for incorporating the mark into the received first stream thereby generating a preprocessed first digital image stream 131. The system further comprises a second digital image receiver 120 for receiving a second digital image stream 119 and providing a received second digital image stream 121. The system further comprises inserting module 140 for inserting the received second stream into the preprocessed first stream based on the mark for outputting the outputted combined digital image stream 141. The inserting module comprise a mark reader 150 receiving the preprocessed stream 131 for extracting mark information 151 from the mark. The inserting module further comprise a digital image stream mixer 160 for mixing the received second stream 121 into the preprocessed stream 131 based upon the mark information 151 provided by the mark reader. The inserting module further comprise output module 170 receiving the combined stream 161 for providing an outputted combined digital image stream 141.

All live broadcasts are linear by nature, and require some form of preproduction. Within the concept of video mixing automation, a first digital image sequence is prepared, for instance a slide show made by an operator, which is then provided with visually recognizable patterns called machine readable marks here. The operator can freely place and size these patterns anywhere within the slides at the position where he or she wants the second digital image stream to be placed. A pattern reader forming part of the processing module finds these patterns in real-time, when the first image sequence is played, assesses their position and size, and replaces the mark with the second digital image stream. This replacement may in practice be done by positioning the second image stream directly on top of them, thereby hiding the now underlying pattern.

The second digital image stream may be generated by a video source, which can for instance be any device that produces video that can be acquisitioned by standards based audio visual equipment. Examples are cameras and desktop PCs. A video mixer, that is any device that is able to acquisition video from multiple Video Sources, and can sequence and composite these sources in real-time may be used. The pattern reader in the processing module may be a software solution that is both able to find visual patterns in a live video source, assess its size, position, and intended other video source, and then instruct a video mixer so that a new composite is created in real-time.

Effects and advantages, as mentioned in the description, apply to this embodiment of the system.

Figure 2 shows an embodiment of a machine-readable mark 200 for use in the present invention. This may be a visual pattern, being a pattern that can be easily read by machines.

The mark 200 comprises a frame 210. The frame may specify the boundaries of the mark. The frame may specify the position and/or ratio of how the second stream is to be inserted into the preprocessed stream.

The mark further comprises a webcam symbol 220. The webcam symbol may visually identify the mark to an operator placing the mark into the received first stream. The webcam symbol may identify a digital image stream source for the second stream, which is in this case a webcam.

The mark further comprises a QR code 230. Common examples are barcodes and QR codes but also color codes may be used. The advantage of barcodes or QR codes are that they can comprise extra information, in this case for instance the aspect ratio of 16 times 9 and the fact that the second image stream is to be captured from video source (camera) 1.

Figure 3 shows the incorporation of the mark in a first image sequence. In practice, a user or operator prepares this by inserting the mark into his or her slide show. The mark itself indicates where in the slide show the video should be.

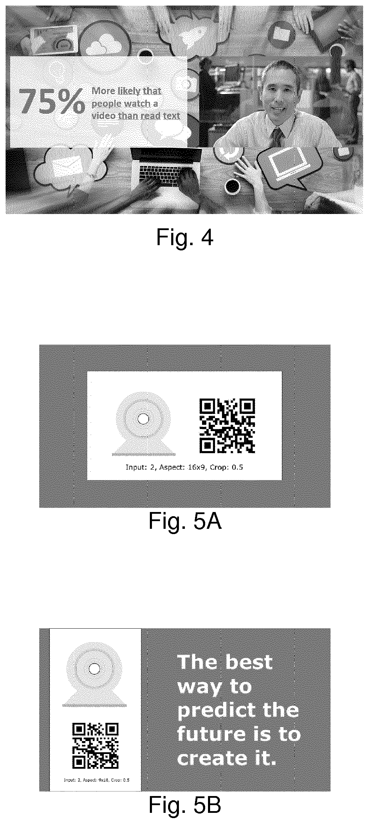

Figure 4 shows how the mark is replaced with the second image stream, which is (evidently not visible in this application) a moving video.

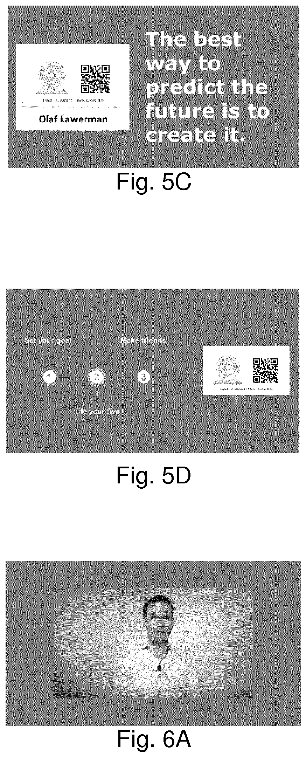

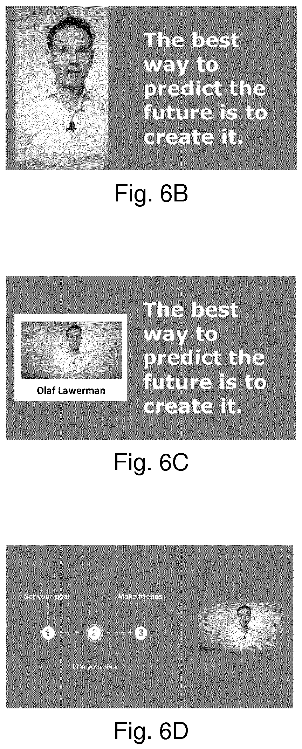

Figures 5a-d show a number of images from a first sequence, provided with the same mark a and figures 6a-d show some stills from the resulting combined image stream after inserting the second image stream into the first image sequence.

When going through the slides, the video continues, and the presenter may present details to each slide to a final spectator. The output of the method and/or system is a combined digital image stream that can be published online or presented as a video file.

Figure 7 schematically shows an embodiment of the method 700 according to the invention. The method comprises the step of providing 710 a first digital image stream. The method further comprises the step of incorporating 720 a machine-readable mark into the first digital image stream, thereby generating a preprocessed digital image stream. The method further comprises the step of providing 730 a second digital image stream. The method further comprises the step of inserting 740 the second stream into the preprocessed stream, thereby generating a combined digital image stream. The method further comprises the step of outputting 750 the combined stream.

Effects and advantages, as mentioned throughout the description, apply to this embodiment of the method.

Figure 8 schematically shows an embodiment of a computer program product, computer readable medium and/or non-transitory computer readable storage medium 800 having a writable part 810 comprising including a computer program 820, the computer program comprising including instructions for causing a processor system to perform a method of an embodiment. The computer program may be embodied on the computer readable medium as physical marks or by means of magnetization of the computer readable medium. However, any other suitable embodiment is conceivable as well. Furthermore, it will be appreciated that, although the computer readable medium 800 is shown here as an optical disc, the computer readable medium 800 may be any suitable computer readable medium, such as a hard disk, solid state memory, flash memory, etc., and may be non-recordable or recordable. The computer program comprises instructions for causing a processor system to perform said method of an embodiment.

In a practical embodiment the invention may be a program extension for image sequence software such as slide show software, providing a tool (such as a button) for incorporating a machine-readable mark (which preferably comprises a reference to the video source) to at least part of the first digital image stream or sequence (in this case the slide show), which mark then comprises by insertion a position within or with respect to the first image stream or sequence and/or an interval within the length of the first image stream or sequence.

The thus prepared slide show can then be processed by a system according to the present invention for replacing the mark by the second digital image stream, preferably in real time while generating (i.e. recording) this second image stream.

It is noted that the method has been described in terms of steps to be performed, but it is not to be construed that the steps described must be performed in the exact order described and/or one after another. One skilled in the art may envision to change the order of the steps and/or to perform steps in parallel to achieve equivalent technical results.

The terminology used herein is for the purpose of describing particular embodiments only and is not intended to be limiting of the invention. As used herein, the singular forms "a," "an," and "the" are intended to include the plural forms as well, unless the context clearly indicates otherwise. It will be further understood that the terms "comprises" and/or "comprising", when used in this specification, specify the presence of stated features, integers, steps, operations, elements, and/or components, but do not preclude the presence or addition of one or more other features, integers, steps, operations, elements, components, and/or groups thereof.

The corresponding structures, materials, acts, and equivalents of all means, modules or step plus function elements in the claims below are intended to include any structure, material, or act for performing the function in combination with other claimed elements as specifically claimed. The description of the present invention has been presented for purposes of illustration and description, but is not intended to be exhaustive or limited to the invention in the form disclosed. Many modifications and variations will be apparent to those of ordinary skill in the art without departing from the scope and spirit of the invention. The embodiment was chosen and described in order to best explain the principles of the invention and the practical application, and to enable others of ordinary skill in the art to understand the invention for various embodiments with various modifications as are suited to the particular use contemplated.

Various embodiments of the invention may be implemented as a program product for use with a computer system or a processor, where the program(s) of the program product define functions of the embodiments (including the methods described herein). In one embodiment, the program(s) can be contained on a variety of non-transitory computer-readable storage media (generally referred to as "storage"), where, as used herein, the expression "non-transitory computer readable storage media" comprises all computer-readable media, with the sole exception being a transitory, propagating signal. In another embodiment, the program(s) can be contained on a variety of transitory computer-readable storage media. Illustrative computer-readable storage media include, but are not limited to: (i) non-writable storage media (e.g., read-only memory devices within a computer such as CD-ROM disks readable by a CD-ROM drive, ROM chips or any type of solid-state nonvolatile semiconductor memory) on which information is permanently stored; and (ii) writable storage media (e.g., flash memory, floppy disks within a diskette drive or hard-disk drive or any type of solid-state random-access semiconductor memory) on which alterable information is stored.

Besides the exemplary and non limiting embodiments described above the invention may comprise various embodiments and implementation variants, which fall all within the scope of the following claims.

## Claims

1. Method (700), in particular a computer implemented method, for providing a combined digital image stream, comprising:
A. providing (710) a first digital image stream or sequence;
B. incorporating (720) a machine-readable mark to at least part of the first digital image stream or sequence, the mark at least comprising:
a. a position within or with respect to the first image stream or sequence; and/or
b. an interval within the length of the first image stream or sequence;
C. providing (730) at least a second digital image stream;
D. inserting (740), based on the mark, the second image stream or sequence into the first digital image stream or sequence at the position and/or interval within the first image stream or sequence; and
E. outputting (750) a combined digital image stream, wherein the second image stream is incorporated in the first image stream or sequence.

2. Method according to claim 1, comprising registering/generating the second image stream during running or playing the first image stream.

3. Method according to any of the preceding claims wherein the first image stream comprises a slide show.

4. Method according to any of the preceding claims, wherein the mark comprises a BAR, QR or color code, such as multiple pixels comprising a predetermined color.

5. Method according to any of the preceding claims, wherein the position and interval are determined by the position and the interval of the mark itself.

6. Method according any of the preceding claims, wherein the mark comprises additional information, such as an input source, a display ratio, a cropping setting and/or a resolution.

7. Method according to any of the preceding claims, comprising incorporating the same machine-readable mark multiple times or incorporating different machine-readable marks.

8. System (100) for providing a combined digital image stream (141), comprising:
A. a first input (110) for receiving a first digital image stream (109) or sequence;
B. Tools for incorporating a machine-readable mark (116) to at least part of the first digital image stream or sequence, the mark at least comprising:
a. a position within or with respect to the first image stream or sequence; and/or
b. an interval within the length of the first image stream or sequence;
C. a second input (120), for receiving at least a second digital image stream (119); and
D. a processing module(140), for
a. inserting, based on the mark, the second image stream or sequence into the first digital image stream or sequence at the position and/or interval within the first image stream or sequence, and
b. outputting a combined digital image stream, wherein the second image stream is incorporated in the first image stream or sequence.

9. System according to claim 8, provided with a camera for registering/generating the second sequence during playing the first sequence.

10. System according to claim 8 of 9, adapted for displaying a first image stream or sequence formed by a slide show.

11. System according to any of claims 8-10, provided with tools for providing a mark, in the form of a BAR, QR or color code, such as multiple pixels with a predetermined color.

12. System according to claim 11, wherein the tool is further provided for incorporating additional information in the mark, such as an input source, a display ratio and/or a resolution.

13. System according to claim 8. Wherein the tools are provided in a user interface.

14. Non volatile data carrier (800), comprising a program extension for image sequence software, in particular slideshow-software, for providing an incorporating tool for incorporating a machine-readable mark to at least part of the first digital image stream or sequence, the mark at least comprising:
a. a position within or with respect to the first image stream or sequence; and/or
b. an interval within the length of the first image stream or sequence.

15. Computer system, comprising image sequence software, in particular slide show software, provided with an extension as described in claim 13.
